# EUROPEAN PATENT APPLICATION

(11) **EP 3 034 207 A1**
(43) Date of publication of application: **22.06.2016**
(21) Application number: 15199910.9
(22) Date of filing: 14.12.2015
(51) Int. Cl.: B22F 3/105

(54) **METHOD OF QUALITY ASSURANCE OF AN ADDITIVE MANUFACTURING BUILD PROCESS**

(30) Priority: 15.12.2014 GB 201422279
(71) Applicant: AirbusGroup Limited, London WC2R 0AP (GB); Airbus Defence and Space GmbH, 85521 Ottobrunn (DE)
(72) Inventor: Meyer, Jonathan, London, WC2R 0AP (GB); Dalledonne, Claudio, 85521 Ottobrun (DE); Henstridge, Andrew, London, WC2R 0AP (GB)
(74) Representative: Ribeiro, James Michael

(57) **Abstract**

A method of quality assurance of an additive manufacturing build process. An additive manufacturing system is operated to perform a build process by building a part on a build platform, the part being built by forming a series of layers of metallic material on the build platform. The metallic material melts and solidifies during the build process thereby bonding the part to the build platform and creating thermally induced stress in the part which tends to distort the build platform. During the build process, a parameter is measured which is related to the thermally induced stress in the part to generate measurement data. The measurement data is stored and analysed to determine whether a defect has formed during the build process. A warning is generated if the analysis of the stored measurement data concludes that a defect has formed during the build process. The warning includes an indication of a position in the part.

## Description

### FIELD OF THE INVENTION

The present invention relates to a method and associated apparatus for quality assurance of an additive manufacturing build process.

### BACKGROUND OF THE INVENTION

Additive manufacturing typically involves the production of three-dimensional parts by depositing material layer by layer to build either complete components or add features to a pre-formed substrate. It contrasts with conventional subtractive machining processes, in that a component produced by an additive manufacturing process is near net shape, i.e. it is close to its final (net) shape thereby reducing the need for additional finishing and wasted excess material.

A key challenge with additive manufacturing processes is the formation of cracks and distortion in the part during the build process due to the internal stresses generated as the deposited material solidifies.

In WO2014/072699 a bed supports a parent plate of a work piece which is held in position by clamps. A stack of layers is built on the parent plate by a process of additive manufacturing, and stresses in the work piece are measured by load cells while progressively forming the stack. If such stresses are above a predetermined threshold, the work piece is stress relieved by a cold working process such as cold rolling or peening while mounted to the additive manufacturing apparatus.

### SUMMARY OF THE INVENTION

A first aspect of the invention provides a method of quality assurance of an additive manufacturing build process, the method comprising: operating an additive manufacturing system to perform a build process by building a part on a build platform, the part being built by forming a series of layers of metallic material on the build platform, the metallic material melting and solidifying during the build process thereby bonding the part to the build platform and creating thermally induced stress in the part which tends to distort the build platform; during the build process, measuring a parameter related to the thermally induced stress in the part to generate measurement data; storing the measurement data in a data logger to provide stored measurement data in the data logger; and analysing the stored measurement data to determine whether a defect has formed during the build process. A warning is generated if the analysis of the stored measurement data concludes that a defect has formed during the build process. This warning may be displayed on a display device and/or stored for later use. The warning includes an indication of a position in the part - for instance identifying a particular one of the layers which was being formed when the defect appeared.

A second aspect of the invention provides apparatus for performing the method of the first aspect, the apparatus comprising: a build platform; an additive manufacturing system which can be operated to perform the build process; a measurement system arranged to measure the parameter related to the thermally induced stress in the part to generate the measurement data; a data logger for storing the measurement data to provide stored measurement data in the data logger; and an analysis tool configured to analyse the stored measurement data to determine whether a defect has formed during the build process, and to generate a warning if the analysis of the stored measurement data concludes that a defect has formed during the build process, wherein the warning includes an indication of a position in the part.

The stored measurement data may be analysed in a number of ways. For example it may be analysed to determine whether a rate of change with respect to time of the measurement data has changed from positive to negative, or vice versa, such a change indicating that a defect has formed during the build process. Alternatively the stored measurement data may be compared with comparison data (for example model data derived from a model, calibration measurement data taken when building a similar part, or any other suitable type of comparison data) and identifying any deviation between the measurement data and the comparison data.

Preferably the stored measurement data comprises plural items of stored measurement data, each item including a value of the parameter measured at a different time. For example each item may comprise a data set [t, R] where t is a time stamp and R is the value of the parameter. Typically a plurality of these items of stored measurement data are analysed together to determine whether a defect has formed during the build process. For example the items may be analysed to determine a rate of change with respect to time, or they may be compared with time-stamped comparison data as described above.

Optionally correlation data may be generated and stored which correlates the stored measurement data with the build process. Each item of measurement data may have an associated item of correlation data which indicates a position in the part. This correlation data may be used to generate the previously mentioned warning which includes an indication of a position in the part.

The parameter which is related to the thermally induced stress in the part may be generated by measuring distortion of the build platform - for example by optically measuring the shape of the build platform, or generating an electrical signal at a load cell in response to the build platform applying a force to the load cell. The load cell may be vertical or horizontal.

Where a load cell is used, then it may measure the load in a number of different ways including measuring a resistance change (strain gauge) or a capacitance change, or using a piezoelectric device. Typically the load cell measures a deformation or strain which is then transformed into a load.

Alternatively the parameter may be directly indicative of the thermally induced stress in the part, and may be generated by directly measuring the part using an optical technique for example.

The parameter may be directly or inversely proportional to the thermally induced stress, or it may be related to the thermally induced stress without being strictly proportional to it.

A third aspect of the invention provides a build platform for an additive manufacturing system, the build platform comprising: a sub-structure; a build plate with a lower surface and a substantially planar upper surface opposite the lower surface, the upper surface defining a horizontal build plane; three or more bearings which are distributed around a periphery of the build plate and mount the build plate to the sub-structure, wherein each bearing has a bearing surface which contacts an upwardly directed part of the build plate to oppose upwardly directed bending forces from the build plate, and wherein each bearing constrains upward vertical motion of the build plate relative to the sub-structure but permits horizontal motion of the build plate relative to the sub-structure; and a load cell contacting the lower surface of the build plate and configured to generate an electrical signal in response to the lower surface of the build plate applying a force to the load cell.

The load cell may generate the electrical signal in a number of different ways including measuring a resistance change (strain gauge) or a capacitance change, or using piezoelectric device. Typically the load cell measures a deformation or strain which is then transformed into a load.

The bearing surface and the upwardly directed part of the build plate may be threaded parts (for instance the bearing being screwed into a threaded hole in the build plate) or they may be planar or any other shape.

Optionally each bearing is a flexural bearing comprising a strut which extends lengthwise between the build plate and the sub-structure and is configured to bend along its length to permit the horizontal motion of the build plate relative to the sub-structure. Alternatively each bearing is a sliding bearing in which the upwardly directed part of the build plate is configured to slide across the bearing surface to permit the horizontal motion of the build plate relative to the sub-structure.

The term "bearing" is used herein to refer to a part which constrains relative motion between the build plate and sub-structure in one direction and permits relative motion in another direction, but does not necessarily "bear" (i.e. support the weight of) the build plate.

Preferably each bearing permits horizontal motion of the build plate relative to the sub-structure in a primary load direction which extends between the load cell and the bearing.

Optionally at least one of the bearings further comprises a horizontal load cell configured to generate an electrical signal in response to the build plate applying a horizontal force to the horizontal load cell.

A wide variety of additive manufacturing process may be used to build the part, including (but not limited to) directed energy deposition (in which thermal energy is used to fuse the metallic material as it is deposited); powder bed fusion (in which thermal energy selectively fuses regions of a powder bed); or any other additive manufacturing process which creates thermally induced stress in the built part. In one embodiment of the invention the additive manufacturing process forms the series of layers of metallic material by feeding metallic feedstock material and melting the metallic feedstock material with a laser beam, electric current or other thermal energy source as it is deposited.

After the part has been built, it is typically removed from the build platform.

### BRIEF DESCRIPTION OF THE DRAWINGS

Embodiments of the invention will now be described with reference to the accompanying drawings, in which:
Figure 1 illustrates an additive manufacturing system with a build platform which distorts during the build process;
Figure 2 illustrates an additive manufacturing system according to an embodiment of the present invention;
Figure 3 illustrates the force acting on the build platform;
Figure 4 is a plan view of a build platform;
Figure 5 shows sectional views of one of the flexure bearings of the build platform of Figure 4;
Figure 6 is a vertical sectional view of a sliding bearing;
Figure 7 is a plan view of a build platform with horizontal load sensors;
Figure 8 is a schematic side view of the build platform of Figure 7;
Figure 9 is a graph showing R1 for a normal part and a defective part;
Figure 10 is a view showing a crack between the part and build platform;
Figure 11 shows apparatus for storing and analysing the measurement data;
Figure 12 shows an alternative build platform;
Figure 13 is a plan view of the build platform of Figure 12;
Figure 14 is a vertical section through the build platform;
Figure 15 is a side view of the build platform; and
Figure 16 shows experimental data taken using the build platform of Figure 12.

### DETAILED DESCRIPTION OF EMBODIMENT(S)

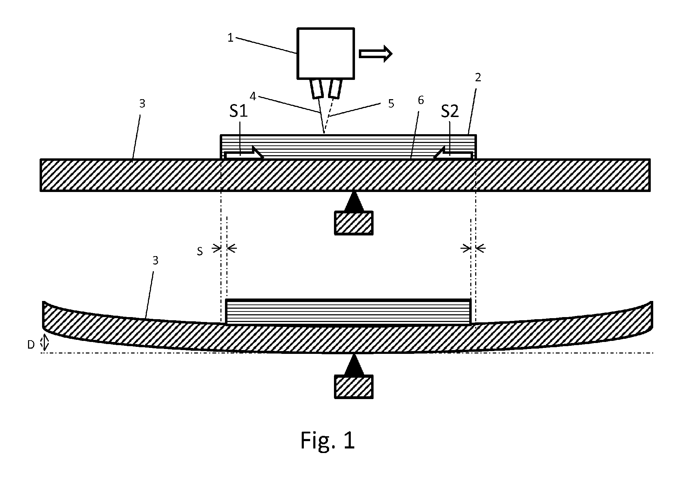

Figure 1 shows an additive manufacturing system, not according to the invention, comprising a build head 1 building a near net shape part 2 on a build plate 3. The build head 1 feeds metallic feedstock material 4 (such as titanium alloy or aluminium alloy) towards the build platform, and the material 4 is melted by a laser beam 5 as it is fed onto the build plate. The feedstock material 4 may be fed in the form of a wire or a blown powder, for example. The build head 1 is scanned across the build plate 3 to build the part 2 by forming a series of layers of metallic material on the substrate. Typically the material is a titanium alloy such as Ti6Al4V.

The layers include a first layer which fuses to the substrate at a part/substrate interface 6, and a series of additional layers each of which fuses with a previously deposited layer. The shape and size of each layer is determined in accordance with a computer aided design (CAD) model of the part 2 stored in a memory. Although the layers are all identical in Figure 1 for ease of illustration, they may in general have different shapes and/or sizes.

The metallic material melts and solidifies during the build process, thereby fusing the part 2 to the build plate 3. The material shrinks as it cools thereby creating thermally induced stress in the part 2. The thermally induced stress induces shear forces S1, S2 at the interface 6 generated by the shrinkage of the metal as it solidifies and fuses to the build plate. These shear forces S1, S2 cause the build plate 3 to become distorted as shown in the lower part of Figure 1, which shows lateral shrinkage S of the part 2 and vertical deformation D at the periphery of the build plate due to bending. Such deformation of the build plate is undesirable because its upper surface should ideally be predominantly planar.

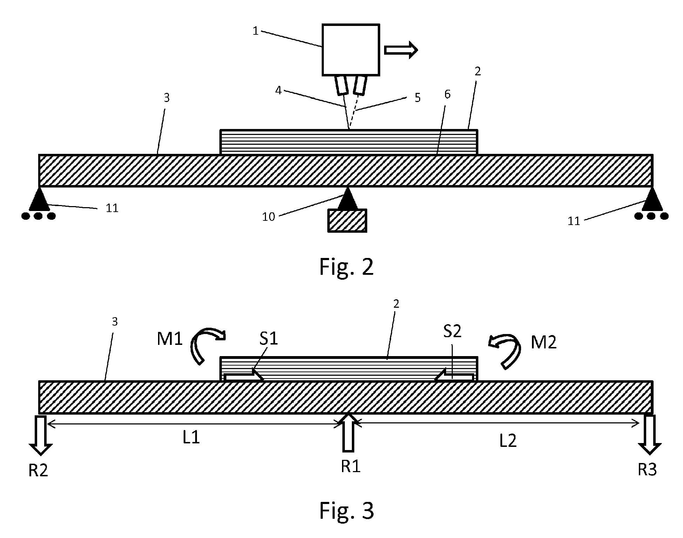

Figure 2 shows an additive manufacturing system according to an embodiment of the invention. Certain elements of the system of Figure 2 have equivalents in Figure 1. These are given the same reference number and will not be described again.

The build plate 3 is supported below its geometric centre by a load cell 10. Bearings 11, 12 at the edge of the build plate constrain the edge of the build plate. Specifically, the bearings 11, 12 apply downward reaction forces which oppose upwardly directed bending forces at the periphery of the build plate and inhibit the type of bending of the build plate shown in Figure 1.

Figure 3 shows the forces and moments generated during the build process. The shrinkage of the part 2 creates shear forces S1 and S2 and associated moments M1, M2 (note that M1∼S1 and M2-S2). These forces and moments are reacted by an upward force R1 from the load cell 10, and downward forces R2, R3 from the bearings 11, 12, so R1+R2+R3=0, and R2*L1+ R3*L2+M1+M2= 0. This schematic example is in two-dimensions only. A three-dimensional example has more terms, but the principle is the same.

This relationship means that measuring the reaction force R1 is sufficient to determine whether the shear forces S1, S2 are increasing or decreasing, as R1 is linked to them through the solution of the simultaneous equations above, so S1+S2-R1. In other words, the force R1 measured by the load cell 10 is a parameter which is directly proportional to the thermally induced stress S1+S2 in the part.

As described above, each bearing 11, 12 constrains upward vertical motion of the build plate. To avoid additional bending moments being generated at the periphery of the build plate, the bearings 11, 12 permit horizontal motion of the build plate. In this example the bearings 11, 12 are illustrated as roller bearings which will roll to permit such horizontal motion.

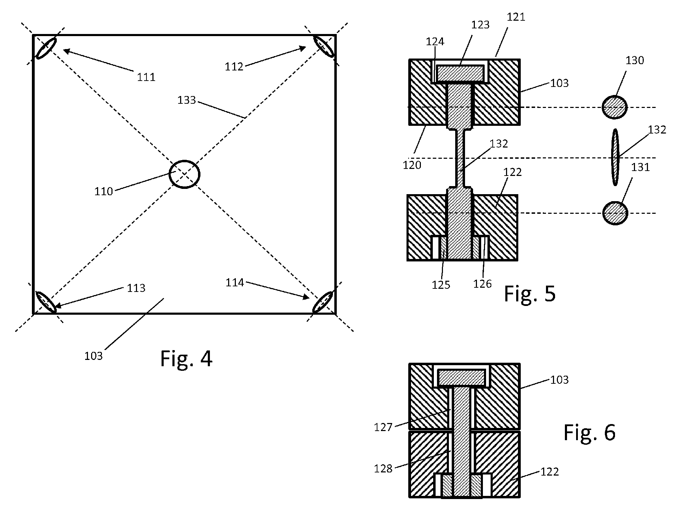

Figure 4 shows a build platform according to a further embodiment of the invention. The platform comprises a square build plate 103 with four bearings 111-114 at its four corners and a load cell 110 beneath its geometric centre. Figure 5 shows one of the bearings 112, the other bearings being identical. The left part of Figure 5 showing a vertical cross-section through the bearing, the plane of the vertical cross-section passing through the load cell 110. The right part of Figure 5 shows three horizontal sections through the bearing.

The build plate 103 has a lower surface 120 and a substantially planar upper surface 121 opposite the lower surface, the upper surface defining a horizontal build plane. The bearing clamps the build plate to a stiff sub-structure 122. The bearing has a head 123 recessed into the upper surface 121 with a lower bearing surface which contacts a recessed upwardly directed annular lip 124 of the build plate to oppose the upwardly directed bending forces from the build plate. Similarly each bearing also has a nut 125 screwed onto the bottom end of the strut and recessed into a lower surface of the sub-structure 122 with a lower bearing surface which contacts a recessed downwardly directed annular lip 126 of the sub-structure to transfer these bending forces from the strut to the sub-structure.

Like the roller bearings 11, 12 in the previous embodiment, the bearings 111-114 constrain upward vertical motion of the build plate relative to the sub-structure but permit horizontal motion of the build plate relative to the sub-structure.

Each bearing 111-114 is a flexural bearing comprising a strut which extends lengthwise between the build plate 103 and the sub-structure 122 and is configured to bend along its length to permit the horizontal motion of the build plate relative to the sub-structure. As shown on the right-hand side of Figure 5, the strut has upper and lower parts 130, 131 with circular cross-sections, and a central part 132 between the build plate and sub-structure with an oval cross-section. The central part 132 has a narrow width W1 transverse to its length in a primary load direction 133 which extends between the load cell 110 and the bearing 112, and a broad width W2 transverse to its length and transverse to the primary load direction 133. W1 is much less than W2 so that the central part 132 of the strut bends more easily in the primary load direction 133 than transverse to the primary load direction.

Note that each bearing applies a downward force R2, R3 etc. to the build plate 103 but cannot apply an upward force to the build plate 103. Therefore the weight of the build plate (which generates a much smaller force than the bending forces caused by the build process) is supported by the load cell 110 only.

Optionally the build plate 103 is pre-loaded before the build process by tightening the nuts 125 of all of the bearings 111-114. This causes the bearings 111-114 to apply downward pre-loading forces which cause the periphery of the build plate to bend down slightly and a small pre-loading force to be applied to the load cell 110 by the build plate (in addition to the force applied by the weight of the build plate).

Figure 6 shows an alternative bearing: in this case a sliding bearing with a shaft passing thorough oversized holes 127, 128 in the build plate 103 and sub-structure 122 respectively. This enables the bearing to operate as a sliding bearing in which the upwardly directed annular lip 124 of the build plate is configured to slide freely across the bearing surface of the head 123 to permit the horizontal motion of the build plate 103 relative to the sub-structure.

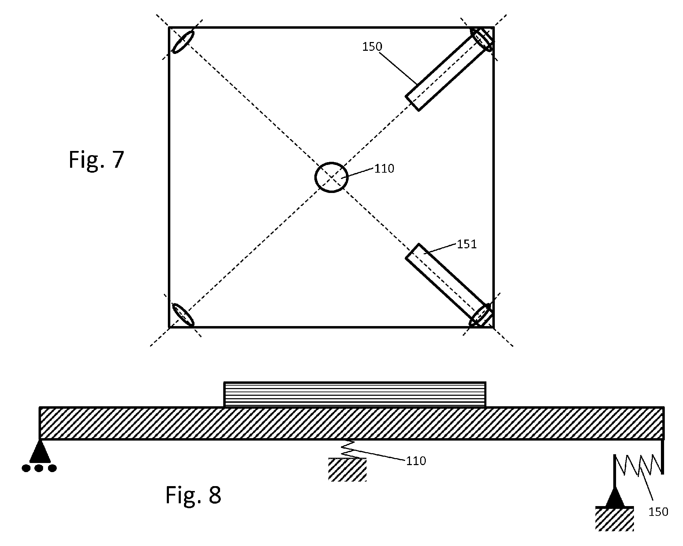

Figure 7 shows a build platform according to a further embodiment of the invention. It is similar to the platform of Figure 4, but in this case two of the bearings incorporate horizontal load cells 150, 151, one of which is schematically indicated as a horizontal spring in Figure 8. Note also that the load cell 110 is schematically indicated as a vertical spring in Figure 8. The load cell 110 must be as stiff as possible (i.e. the spring has a high spring constant) to minimise the amount of bending of the build plate, but the load cells 150, 151 are ideally of much lower stiffness than the load cell 110.

As shown in Figure 7, the measurement axes of the load cells 150, 151 pass through the load cell 110, and the measurement axes of the three load cells 110, 150, 151 are orthogonal to each other.

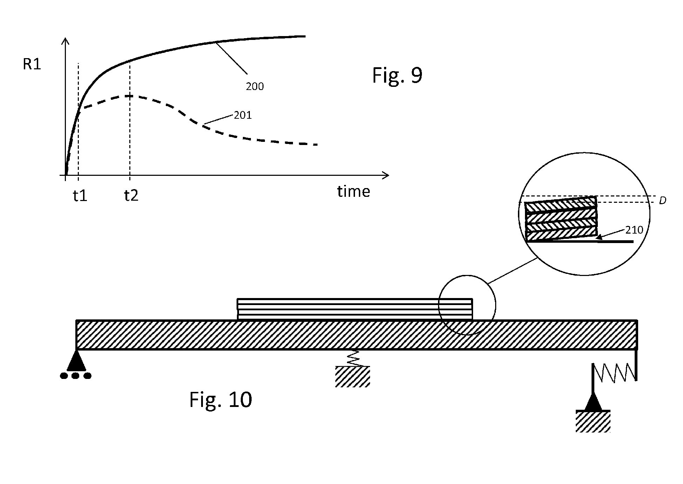

Figure 9 is a graph showing the variation in the force R1 during a normal build process with a solid line 200. The variation in the force R1 during a defective build process is shown with a dashed line 201. The solid line 200 increase monotonically during the build process as the thermally generated stresses R2, R3 gradually increase. Figure 10 shows a part with four layers, and during formation of the fourth layer a crack 210 has opened up at the interface between the part and the build plate. The formation of this crack 210 relieves the shear stress so the force R1 deviates as shown by dashed line 201 at time t1, increases to a maximum at t2, then decreases.

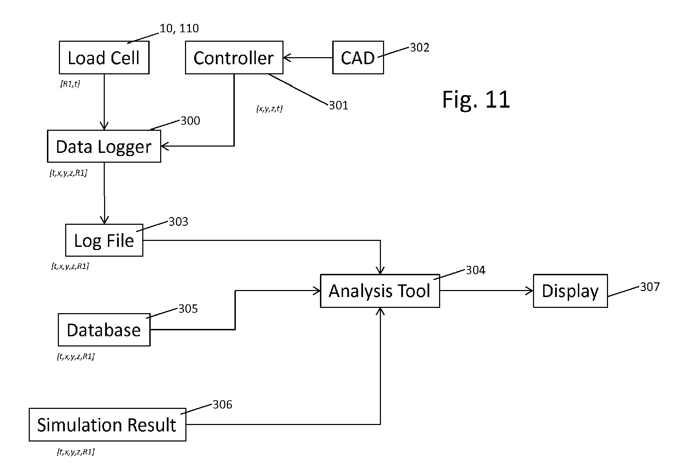

Figure 11 shows a system for analysing the force R1 for quality assurance purposes. The load cell 10, 110 generates an electrical signal in response to the build plate applying the force R1 to the load cell, and this electrical signal is used to generate a series of time-stamped stress measurement data sets [R1,t] where t is the time of the measurement. These stress measurement data sets are stored in a data logger 300. A controller 301 controls the movement of the build head 1 in accordance with a computer aided design (CAD) model of the part stored in a CAD memory 302. The movement of the build head 1 generates a series of time-stamped build data sets [x,y,z,t] where position values x,y,z define the position of the build head at time t. The data sets are combined at the data logger 300 to generate merged data sets [t,x,y,z,R1] which are stored in a log file 303.

A computer-implemented analysis tool 304 is configured to analyse the stored stress measurement data in the log file 303 to determine whether a defect has formed during the build process, either in the part or in the interface between the part and the build plate. The tool 304 can operate in one of two ways. A first method is as follows. A database 305 stores time-stamped calibration measurement data sets [t,x,y,z,R1] taken when building a similar part. The tool 304 compares the stored stress measurement data sets in the log file 303 with the calibration measurement data sets in the database 305, and identifies any statistically significant deviation between them. A second method is as follows. A finite element model simulates the build process for the part, predicts the anticipated profile of the force R1, and stores a simulation result in a memory 306 as a series of time-stamped model data sets [t,x,y,z,R1]. The tool 304 compares the stored stress measurement data sets in the log file 303 with the model data sets in the memory 306, and identifies any statistically significant deviation between them.

This process enables the analysis tool 304 to not only determine whether a defect has formed during the build process, but also the precise position of the build head 1 (including the particular layer being deposited) when the defect appeared. This is enabled by the fact that the merged data sets [t,x,y,z,R1] provide correlation data which correlates the stress measurement data R1 at time t with the position x,y,z of the build head 1 at the same time t. This principle is demonstrated in Figure 9 which shows the line 201 deviating from the normal line 200 at time t1 which coincides with deposition of the fourth layer as shown in Figure 10.

It is useful to know which layer in the build process coincided with the failure as this can help to develop simulation capabilities, and can also help to identify likely locations for defects caused by the crack initiation, but which may be distant from the crack. These defects can be formed due to the crack allowing the top surface of the part to move relative to the desired plane of deposition, resulting in an unintended mismatch of the build head, beam focus and material layer thickness. In the example of Figure 10 the crack has initiated when the fourth layer was building, so there is a risk of defects in this fourth layer even though the crack is in the interface between the first layer and the build plate.

In a more basic process, the analysis tool 304 may perform a more simple analysis of the data, for instance determining whether a rate of change with respect to time of R1 has changed from positive to negative, such a change from positive to negative indicating that a defect has formed during the build process. In the example of Figure 9 this would be detected by the analysis tool at time t2.

On detection of a defect the analysis tool 304 generates a warning message on a display screen 307, the warning message indicating the x,y,z location of the part to inspect.

In the example given above the analysis tool 304 only analyses the force R1 measured by the vertical load cell 110. This provides the most reliable information since R1 is directly proportional to S1+S2. Optionally the analysis tool 304 analyses the measurement data from the horizontal load cells 150, 151, either to supplement the R1 measurement data from the vertical load cell 110 or as a replacement for the R1 measurement data. The measurement data from the horizontal load cells 150, 151 is also related to thermally generated stress S1+S2 (in the sense that it will increase as S1+S2 increases, and decreases as S1+S2 decreases) although unlike R1 it may not be directly proportional to S1+S2. So it can be analysed in a similar way to R1 in order to determine the presence of a defect in the part, or in the interface between the part and the build plate.

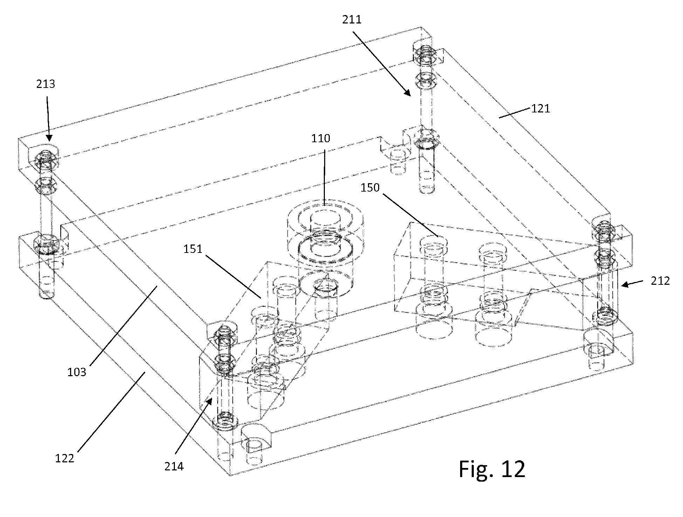

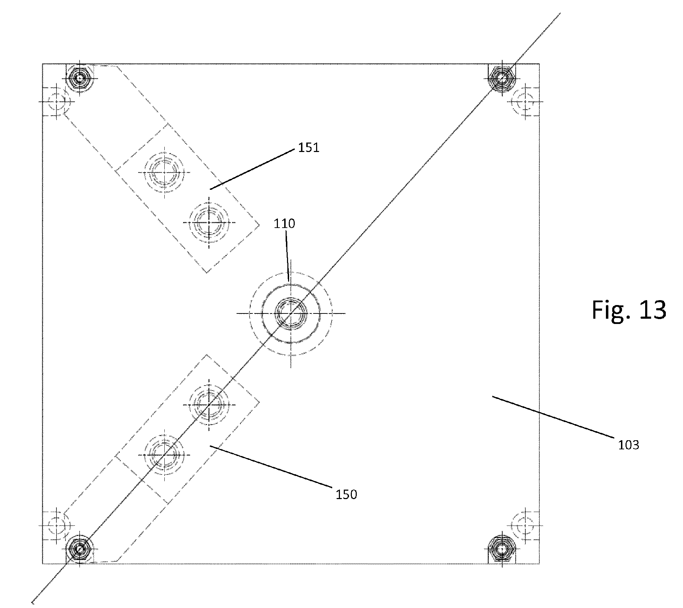

The previous drawings show the build platform in schematic form only, and Figures 12-15 show a more detailed example of a build platform. Elements of the build platform which have corresponding elements in the build platform of Figure 7 will be re-used, and these elements will not be described again.

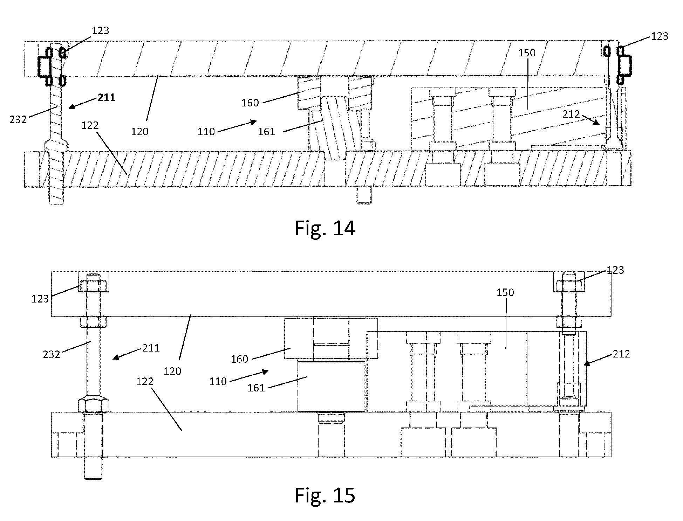

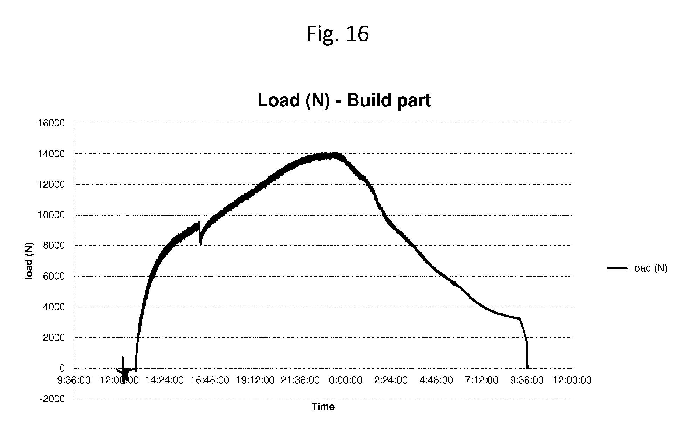

As shown in Figure 14 the load cell 110 includes a part 160 with an annular shape which contacts the build plate 103, and a stiff spacer 161 which contacts the sub-structure 122. The part 160 is a Novatech F207 load cell available from Novatech Measurements Limited of East Sussex, UK, with product details available at: http://www.novatechloadcells.co.uk/ds/f207.htm. The bearings 211-214 are flexure bearings similar to the flexure bearings in Figure 7. Figures 15 and 16 show one of the bearings 211 with no horizontal load cell, and one of the bearings 212 with a horizontal load cell 150. Unlike the bearing of Figure 5 which has a lower nut 125, the bearing 211 is secured to the sub-structure 122 by screwing the strut 232 of the bearing into a threaded hole in the sub-structure 122. The bearing 212 has a strut which is attached to one end of the load cell 150, and the other end of the load cell 150 is attached to the sub-structure 122.

Like the bearings in the previous embodiments, the bearings 211-214 constrain upward vertical motion of the build plate relative to the sub-structure but permit horizontal motion of the build plate relative to the sub-structure.

Figure 16 is a graph showing actual experimental data using the build platform of Figure 12. The force R1 increases to about 14000N then reduces due to a defect.

Although the invention has been described above with reference to one or more preferred embodiments, it will be appreciated that various changes or modifications may be made without departing from the scope of the invention as defined in the appended claims.

## Claims

1. A method of quality assurance of an additive manufacturing build process, the method comprising:
a. operating an additive manufacturing system (1) to perform a build process by building a part on a build platform (3), the part being built by forming a series of layers of metallic material on the build platform, the metallic material melting and solidifying during the build process thereby bonding the part to the build platform and creating thermally induced stress in the part which tends to distort the build platform;
b. during the build process, measuring a parameter related to the thermally induced stress in the part to generate measurement data;
c. storing the measurement data in a data logger (303) to provide stored measurement data in the data logger; and
d. analysing the stored measurement data to determine whether a defect has formed during the build process,
the method further comprising generating a warning if the analysis of the stored measurement data concludes that a defect has formed during the build process, wherein the warning includes an indication of a position in the part.

2. The method of claim 1 wherein the stored measurement data is analysed to determine whether a rate of change with respect to time of the measurement data has changed from positive to negative, or vice versa, such a change indicating that a defect has formed during the build process.

3. The method of any preceding claim wherein the indication of a position in the part indicates an x,y,z, location of the part.

4. The method of any preceding claim, wherein analysing the stored measurement data comprises comparing the stored measurement data with comparison data (305), and identifying any deviation between the measurement data and the comparison data.

5. The method of claim 4, wherein the comparison data is model data derived from a model, or calibration measurement data taken when building a similar part.

6. The method of any preceding claim further comprising during the build process generating correlation data which correlates the stored measurement data with the build process, and storing the correlation data.

7. The method of claim 6 wherein each item of stored measurement data has an associated item of correlation data which indicates a position in the part.

8. The method of claim 7 wherein the correlation data is used to generate the warning.

9. The method of any preceding claim wherein measuring a parameter related to the thermally induced stress in the part comprises generating an electrical signal at a load cell (10, 110) in response to the build platform applying a force to the load cell.

10. The method of any preceding claim wherein the stored measurement data comprises items of stored measurement data, each item including a value of the parameter measured at a different time, and wherein a plurality of the items of stored measurement data are analysed together to determine whether a defect has formed during the build process.

11. Apparatus for performing the method of any preceding claim, the apparatus comprising:
a. a build platform (3);
b. an additive manufacturing system which can be operated to perform the build process;
c. a measurement system (10, 100) arranged to measure the parameter related to the thermally induced stress in the part to generate the measurement data;
d. a data logger (300) for storing the measurement data to provide stored measurement data in the data logger; and
e. an analysis tool (304) configured to analyse the stored measurement data to determine whether a defect has formed during the build process, and to generate a warning if the analysis of the stored measurement data concludes that a defect has formed during the build process, wherein the warning includes an indication of a position in the part.

12. The apparatus of claim 11, wherein the build platform comprises:
a. a sub-structure (122);
b. a build plate (121) with a substantially planar upper surface, the upper surface defining a horizontal build plane; and
c. three or more bearings (211-214) which are distributed around a periphery of the build plate and mount the build plate to the sub-structure, wherein each bearing contacts an upwardly directed part of the build plate to oppose upwardly directed bending forces from the build plate, and wherein each bearing constrains upward vertical motion of the build plate relative to the sub-structure but permits horizontal motion of the build plate relative to the sub-structure;
wherein the measurement system comprises a load cell (110) which contacts a lower surface of the build plate opposite the upper surface, and is configured to generate the measurement data in response to the lower surface of the build plate applying a force to the load cell.

13. A build platform for an additive manufacturing system, the build platform comprising:
a. a sub-structure (122);
b. a build plate (121) with a lower surface and a substantially planar upper surface opposite the lower surface, the upper surface defining a horizontal build plane;
c. three or more bearings (211-214) which are distributed around a periphery of the build plate and mount the build plate to the sub-structure, wherein each bearing has a bearing surface which contacts an upwardly directed part of the build plate to oppose upwardly directed bending forces from the build plate, and wherein each bearing constrains upward vertical motion of the build plate relative to the sub-structure but permits horizontal motion of the build plate relative to the sub-structure; and
d. a load cell (110) contacting the lower surface of the build plate and configured to generate an electrical signal in response to the lower surface of the build plate applying a force to the load cell.

14. The build platform of claim 13 wherein each bearing is a flexural bearing comprising a strut (232) which extends lengthwise between the build plate and the sub-structure and is configured to bend along its length to permit the horizontal motion of the build plate relative to the sub-structure.

15. The build platform of claim 14 wherein each strut has a first width transverse to its length in a primary load direction which extends between the load cell and the bearing, and a second width transverse to its length and transverse to the primary load direction, and wherein the first width of the strut is less than the second width of the strut so that the strut bends more easily in the primary load direction than transverse to the primary load direction.
